# EUROPÄISCHE PATENTSCHRIFT

(11) **EP 2 676 842 B1**
(45) Veröffentlichungstag und Bekanntmachung des Hinweises auf die Patenterteilung: **13.04.2022**
(21) Anmeldenummer: 13002724.6
(22) Anmeldetag: 25.05.2013
(51) Int. Cl.: B60Q 3/20, B60Q 3/80

(54) **Farbeinstellung einer RGB-Ambientebeleuchtung für eine Cupholderanordnung**
Colour adjustment of an RGB ambient lighting for a cup holder arrangement
Réglage de couleur d'un éclairage d'ambiance RVB pour un agencement de porte-gobelet

(30) Priorität: 20.06.2012 DE 102012012268
(43) Veröffentlichungstag der Anmeldung: 25.12.2013
(73) Patentinhaber: AUDI AG, 85045 Ingolstadt (DE)
(72) Erfinder: Mayer, Michael, 85051 Ingolstadt (DE); Pfeil, Marcus, 90537 Feucht (DE)
(74) Vertreter: Thielmann, Frank

(56) Entgegenhaltungen:
- EP-A1- 1 055 386
- DE-A1-102011 103 497
- DE-U1-202006 003 543
- JP-A- H11 310 070
- US-A1- 2004 140 304
- US-B1- 6 637 709
- DATABASE WPI Week 200949 Thomson Scientific, London, GB; AN 2009-L55740 XP002714855, -& KR 2009 0006497 U (DAESUNG ELECTRIC CO LTD) 1. Juli 2009 (2009-07-01)

## Beschreibung

Die Erfindung betrifft eine Farbeinstellung einer RGB-Ambientebeleuchtung für eine Cupholderanordnung sowie ein Verfahren zum Betreiben einer solchen Cupholderanordnung.

Ambientebeleuchtungen, Fußraumbeleuchtung, beleuchtete Türverkleidungen, Orientierungsbeleuchtung sowie Beleuchtung von Griffen eines Fahrzeugs sind bereits seit längerer Zeit bekannt.

Ambientebeleuchtungen erhöhen nicht nur den Komfort in einer Fahrgastzelle eines Kraftfahrzeugs, sondern erhöhen darüber hinaus die Fahrsicherheit indem sie die Orientierung und Bedienung innerhalb des Fahrzeugs erleichtern.

Ambientebeleuchtungen werden im Allgemeinen als direkte Lichtquelle in Form von Glühlampen oder LED's realisiert, es können allerdings auch indirekte Lichtquellen als Lichtleiter oder Flächenbeleuchtung zur Realisierung einer Ambientebeleuchtung verwendet werden.

Die Ambientebeleuchtung darf den Fahrer nicht ablenken oder stören. Mittels einer Ambientebeleuchtung ist - durch Bestimmen einer Lichtfarbe - ein bestimmtes subjektives Empfinden suggerierbar. Darüber hinaus ist die Lichtfarbe ein wichtiger Designaspekt.

Moderne Fahrzeuge weisen eine Vielzahl von Ablagesystemen und Stausystemen auf, zu denen beispielsweise auch Ascher sowie Cupholder gehören. Dabei haben Cupholder einen besonderen Stellenwert erlangt, zumal sie für Langstreckenfahrer unentbehrlich geworden sind. Sie dienen im Allgemeinen der Aufnahme von Gefäßen für Getränke.

Um den Nutzen des Cupholders zu erhöhen, fanden erste Entwicklungen eines temperierbaren Cupholders für Kraftfahrzeuge statt. Solche Cupholder sind in der Lage, darin aufgenommene Gefäße abzukühlen oder aufzuheizen. Darüber hinaus entsprechen solche temperierte Cupholder den hohen Anforderungen des Premium-Fahrzeugmarkts. Mit solchen Features kann ein Benutzer mit wohl temperierten Getränken seine Fahrt zukünftig komfortabler und entspannter genießen. Der Trend im Fahrzeuginnenraum geht zur Individualisierung und Wohlfühlatmosphäre: "Unterwegs wie zuhause fühlen". Allerdings sind viele der vorgeschlagenen Lösungen von temperierbaren Cupholdern hinsichtlich ihres Energieverbrauchs und ihrer Effizienz noch optimierbar.

Aus der Druckschrift WO 00/71006 A1 ist ein "Kaffeeautomat" mit einem Heißwasseraufbereiter bekannt, der einen Thermostaten in einem Heißwasserbehälter aufweist, wobei der Heißwasseraufbereiter in der Lage ist, eine Heißwassertemperatur qualitativ anzuzeigen. Mittels einer grünen Lampe wird das Erreichen einer bestimmten Temperatur signalisiert, wobei eine rote Lampe aufleuchtet, sobald diese Temperatur unterschritten wird. Des Weiteren ist ein Cupholder vorgesehen, um ein Gefäß für das aufgeheizte beziehungsweise im Heißwasseraufbereiter aufbereitete Wasser darin aufzunehmen.

Ein weiteres Beispiel aus der Druckschrift DE 10 2008 007 254 A1 zeigt ein Trinkgefäß; insbesondere zur Aufnahme für Kaffee; in das Dampf unter Hochdruck durch einen Kaffeefilter geleitet wird. Die Funktionsweise entspricht einer herkömmlichen Espressomaschine. Der Auffangbehälter für den kondensierten Dampf beziehungsweise Kaffee dient gleichzeitig als Becher für den Verzehr des damit angerichteten Kaffees. Neben Betätigungsschaltern für die Kaffeemaschine sind auch Anzeigeelemente vorgesehen, beispielsweise Leuchtdioden, die einen Betriebszustand oder eine Betriebserlaubnis der Kaffeemaschine anzeigen, insbesondere in Abhängigkeit von einer Belastbarkeit eines Fahrzeug-Bordnetzes.

Die KR 2009 0006497 offenbart einen Cup-Temperatur-Controller für einen Cupholder eines Fahrzeugs, welcher eine Steuereinheit zur Ansteuerung eines thermoelektrischen Elements zum Heizen/Kühlen des Cups, einen Sensor zur Erfassung einer Temperatur des Cups sowie eine optische Ausgabeeinheit zur Anzeige eines Steuerzustands in Abhängigkeit eines Steuersignals der Steuereinheit umfasst.

In der US 2004/140304 A1 ist ein Gerät zum Kühlen und Erwärmen einer Babyflasche in einer einzelnen Kammer beschrieben, einschließlich eines Verfahrens zum Betreiben des Geräts. Das Gerät verwendet typischerweise ein thermoelektrisches Modul um die Kammer zu kühlen. Das thermoelektrische Modul kann auch zur Erwärmung der Kammer verwendet werden, oder es kann dafür eine separate Widerstandsheizeinrichtung vorgesehen sein. Zur Anzeige, ob sich das Gerät im Kühlbetrieb oder im Erwärmbetrieb befindet, ist eine Betriebsanzeige vorgesehen.

Aus der US 6 637 701 B1 ist ein selbsteinstellender Cupholder bekannt, welcher einen Aufnahmebereich, Ausgleichshebel und Vorspannelemente zum Vorspannen der Ausgleichshebel in einer ersten Position enthält. Der Aufnahmebereich ist konfiguriert, um einen Teil eines Trinkgefäßes aufzunehmen. Der Cupholder kann eine thermoelektrische Einrichtung zum Heizen und/oder Kühlen des Inhalts des Trinkgefäßes aufweisen. Eine optische Betriebsanzeige (Heizen oder Kühlen) kann vorgesehen sein.

Die Gebrauchsmusterschrift DE 20 2006 003 543 U1 beschreibt eine Vorrichtung zum Anzeigen von Informationen über das Klima im Innenraum eines Kraftfahrzeugs. An einem Bildschirm kann eine Silhouette einer auf einem Sitzplatz im Innenraum sitzenden Person dargestellt werden. Die Darstellung kann mehrfarbig erfolgen, wobei jeder Farbe eine Temperatur zugeordnet ist.

Die Druckschrift JP H11 310070 A offenbart einen Becherhalter. In dem Becherhalter ist ein Temperatursensor integriert, um eine Temperatur des Bechers zu erfassen. Basierend auf der erfassten Temperatur kann eine Farbe einer Lichtquelle angepasst werden.

Die Europäische Patentanmeldung EP 1 055 386 A1 zeigt einen Heißwasseraufbereiter in Form eines Automaten für heiße Getränke. Die Steuerung der Wassermenge erfolgt über eine Pumpe und ein Ventil. Der Heisswasseraufbereiter kann einen Thermostaten aufweisen, welcher das Niedervolt-Heizelement oder die Heizelemente abhängig von der Wassertemperatur im Heisswasserbehälter ein- bzw. ausschaltet.

Es ist eine Aufgabe der vorliegenden Erfindung, eine Cupholderanordnung für ein Fahrzeug vorzusehen, die eine einfachere Nutzung ermöglicht.

Diese Aufgabe wird mit einer Cupholderanordnung für ein Fahrzeug gelöst, welche die Merkmale des Patentanspruchs 1 aufweist sowie einem Verfahren zum Betreiben einer solchen Cupholderanordnung, welche die Merkmale des Patentanspruchs 6 aufweist.

Die erfindungsgemäße Cupholderanordnung für ein Fahrzeug umfasst einen Cupholder, eine Beleuchtungseinheit und eine Steuerungseinheit, die derart eingerichtet ist, dass ein Farbverlauf der Beleuchtungseinheit abhängig von einer relativen Temperatureinstellung des Cupholders steuerbar ist, wobei der Farbverlauf den einzelnen einstellbaren Temperaturwerten der relativen Temperatureinstellung entspricht. Die Cupholderanordnung weist ein Armaturenbrett mit einer Multifunktionsanzeige auf. Die Beleuchtungseinheit ist separat vom Cupholder angeordnet und in der Multifunktionsanzeige des Armaturenbretts integriert. Der besondere Vorteil einer solchen Cupholderanordnung erlaubt dem Benutzer nicht nur auf einfache Art und Weise eine gewünschte Temperatur in oder an dem Cupholder einzustellen, sondern gibt ihm darüber hinaus Aufschluss, wie hoch oder tief eine Ist-Temperatur gerade ist; sie kann anzeigen, welche Restwärme noch beim Cupholder vorhanden ist und kann dadurch Verletzungen des Nutzers vor an der heißen Oberfläche einer beheizbaren Behälteraufnahme des Cupholders vermeiden.

Weiterhin ist die Beleuchtungseinheit mit mehreren Lichtquellen für eine RGB-Beleuchtung mit den Farbwerten Rot, Grün und Blau ausgebildet. Die einzelnen Lichtquellen der Beleuchtungseinheit sind unterschiedlich groß ausgebildet. Dadurch kann dem Benutzer besonders leicht ein subjektives Temperaturempfinden suggeriert werden; beispielsweise indem einem warmen Temperaturwert der Farbwert "Rot" zugeordnet wird und einem davon abweichenden kälteren Temperaturwert der Farbwert "Blau". Mittels einer solchen "mentalen" Unterstützung wird gleichzeitig die Sicherheit bei der Verwendung eines solchen Cupholders erhöht, da ein Benutzer nicht genötigt ist, erst einmal durch "kosten" oder fühlen festzustellen, ob die von ihm eingestellte Temperatur bereits vorliegt oder nicht.

Bei einer nicht beanspruchten Ausführungsform entspricht die Temperatureinstellung einer Soll-Temperatur des Cupholders. Bei der Soll-Temperatur des Cupholders handelt es sich im Allgemeinen um einen vorbestimmten Temperaturwert, den ein Benutzer einstellt, um den Cupholder dazu zu veranlassen, ein sich darin befindliches Gefäß auf eine vorbestimmte Temperatur aufzuheizen und dieses anzuzeigen. Ein weiterer Anwendungsfall stellt die Darstellung der jeweiligen Ist-Temperatur in oder an dem Cupholder dar, anhand dessen, der Benutzer leicht erkennen kann, ob beispielsweise der darin befindliche Inhalt bereits zum Verzehr geeignet ist. Noch eine weitere vorteilhafte Anwendung liegt in der Anzeige der Restwärme des Cupholders, wodurch ein Benutzer des Cupholders vor möglichen Verletzungen gewarnt werden kann.

Gemäß der Erfindung wird eine Temperaturdifferenz der Soll-Temperatur des Cupholders und der Ist-Temperatur in oder an dem Cupholder dargestellt. Dadurch ist es möglich, dem Benutzer beispielsweise darüber Aufschluss zu geben, ob der sich in dem Cupholder befindliche Inhalt bzw. Gefäß bereits eine bestimmte Temperatur erreicht hat oder im Begriff ist sich aufzuheizen bzw. abzukühlen. Dadurch kann der Benutzer einfacher und genauer eine Einstellung einer von ihm gewünschten Temperatur in/an dem Cupholder vornehmen.

Besonders zweckmäßig ist es, wenn eine Lichtwellenlänge und/oder Lichtintensität der Beleuchtungseinheit abhängig von der Temperatur des Gefäßes in dem Cupholder steuerbar ist. Durch eine wechselnde Lichtwellenlänge beispielsweise von "Rot zu Blau" oder eine Variation der Lichtintensität von gedimmtem Licht zu grellem Leuchten, lässt sich einem Benutzer visuell ein subjektives Gefühl bzw. eine subjektive Einschätzung für die in dem Cupholder vorhandene Temperatur vermitteln.

Der Cupholder ist ein aktiv temperierbarer Cupholder zum Wärmen und/oder Kühlen von Gefäßen und/oder dem darin befindlichen Inhalt. Mittels einer solchen Cupholderanordnung ist der Benutzer nicht nur in der Lage zu erkennen, welche Temperatur in dem Cupholder vorliegt bzw. wie stark sich die Temperatur des Gefäßes oder des darin befindlichen Inhalts geändert hat, sondern kann auch gezielt eingreifen, um die Temperatur stärker zu erhöhen bzw. abzusenken. Heutige temperierte Cupholder machen sich elektronisch geregelte Peltier-Technik zunutze, bei der, je nach Polarität der angelegten Spannung, der Behälter des Cupholders gekühlt oder erwärmt wird.

Wenn ein Cupholder sich im unmittelbaren Sichtfeld des Benutzers befindet, ist es besonders vorteilhaft, wenn die Beleuchtungseinheit in dem Cupholder selbst integriert ist. Auf diese Weise lässt sich sofort erkennen, ob der Inhalt in dem Cupholder die gewünschte Temperatur erreicht hat und zum Verzehr bereit ist. Im Fall, dass der Cupholder sich nicht im unmittelbaren Sichtfeld des Benutzers befindet, ist es vorteilhafter, wenn eine Anzeige mittels einer Beleuchtungseinheit, beispielsweise vom Cupholder getrennt, im/auf einer Anzeige einer Armaturtafel vorgesehen ist.

Bei einer Ausführungsform des Cupholders ist die Steuerungseinheit in dem Cupholder integriert. Solche Cupholder sind besonders einfach nachzurüsten, da keine zentrale Steuerungseinheit zu deren Gebrauch/Steuerung angeschlossen werden muss.

Des Weiteren ist es die Cupholderanordnung derart zu gestalten, dass die Steuerungseinheit über eine Mensch-Maschine-Schnittstelle aktivierbar oder einstellbar ist. In den heutigen Fahrzeugen sind solche Schnittstellen bereits selbstverständlich und haben eine breite Akzeptanz gefunden. Ihre Funktionsweise erschließt sich den Benutzern intuitiv. Demnach bietet es sich an, die Integration der Steuerungseinheit des Cupholders über eine solche Mensch-Maschine-Schnittstelle vorzunehmen. Dadurch wird eine Steuerung der Temperatur des Cupholders auf eine gewohnte Art und Weise von dem Benutzer vornehmbar. Dieses wiederum erleichtert nicht nur die Einstellung der gewünschten Temperatur, sondern erhöht auch die Fahrsicherheit der Bedienung des Cupholders.

Ein weiterer Aspekt der Erfindung betrifft ein Verfahren zum Betreiben der Cupholderanordnung, wobei abhängig von einer relativen Temperatureinstellung des Cupholdergefäßes mittels der dem Cupholder zugeordneten Steuerungseinrichtung ein Farbverlauf der Beleuchtungseinheit mit mehreren Lichtquellen für eine RGB-Beleuchtung mit den Farbwerten Rot, Grün und Blau gesteuert wird. Der Farbverlauf entspricht den einzelnen einstellbaren Temperaturwerten der relativen Temperatureinstellung. Die relative Temperatureinstellung entspricht einer Temperaturdifferenz einer durch einen Benutzer eingestellten Soll-Temperatur des Cupholders und einer Ist-Temperatur in oder an dem Cupholder.

Die für die erfindungsgemäße Cupholderanordnung beschriebenen Vorteile und bevorzugten Ausführungsformen gelten auch für das erfindungsgemäße Verfahren und umgekehrt.

Im Folgenden werden die Erfindung und ihre Ausführungsformen anhand einer Zeichnung näher erläutert.

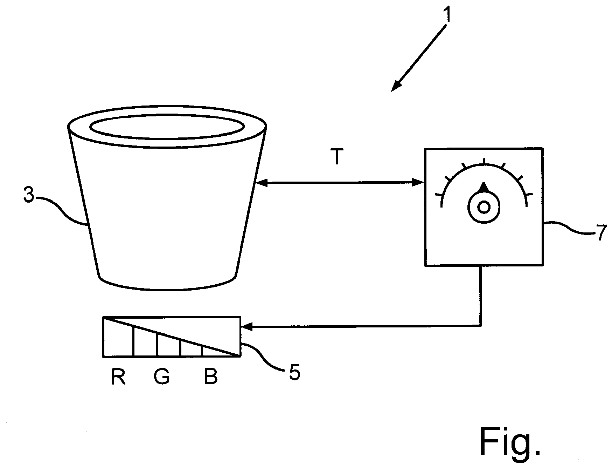

- Fig. 1: stellt schematisch die Elemente einer Cupholderanordnung und deren Interaktion dar.

Die in Fig. 1 veranschaulichte schematische Darstellung einer Cupholderanordnung 1 für ein Fahrzeug zeigt einen Cupholder 3 der mit einer Steuerungseinheit 7 verbunden ist. An beziehungsweise in dem Cupholder 3 wird eine Temperatur T gemessen, anhand der die mit dem Cupholder 3 verbundene Steuereinrichtung 7 eine Energiezufuhr zum Abkühlen oder Erwärmen des in dem Cupholder 3 aufgenommenen Gefäßes beziehungsweise Inhaltes steuert.

Der in der Fig. 1 symbolisch dargestellte Cupholder 3 kann beispielsweise in der Mittelkonsole eines Fahrzeugs angeordnet sein. Darüber hinaus, ist der erfindungsgemäße Cupholder 3 in einer bevorzugten Ausführungsform so konzipiert, dass er kompakt, samt seiner Elemente - Steuerungseinheit 7 und Beleuchtungseinheit 5 - frei innerhalb der Fahrgastzelle anordenbar ist. Dazu ist lediglich eine Verbindung zu einer Energiequelle - hier nicht gezeigt - notwendig um ein erfindungsgemäßes betreiben der Cupholderanordnung 1 zu ermöglichen. Auf diese Weise ist ein einfaches Nachrüsten beziehungsweise Warten der Cupholderanordnung 1 möglich.

Die Steuerungseinheit 7 ist des Weiteren mit einer Beleuchtungseinheit 5 verbunden, mittels der einzelne Lichtquellen, beispielsweise Dioden, in Abhängigkeit einer Temperatur T des Cupholders 3 angesteuert werden. Darüber hinaus ist es möglich, auch die Lichtwellenlänge und/oder Lichtintensität dieser Beleuchtungseinheit 5 beziehungsweise Dioden in Abhängigkeit der Temperatur T des Cupholders 3 zu verändern. Die Beleuchtungseinheit 5 kann in ihrer Form und Wahl der Lichtquellen variiert werden. In einer bevorzugten Ausführungsform weist die Beleuchtungseinheit 5 mehrere nebeneinander angeordnete Dioden auf, die einen Farbverlauf von Rot R nach Grün G bis zu Blau B aufweisen. Anhand des Farbwertverlaufs von Rot R - wobei der Farbwert Rot R einer hohen Temperatur T entspricht - bis hin zu dem Farbwert Blau B - wobei der Farbwert Blau B einer niedrigen Temperatur T entspricht - ist es möglich, dem Benutzer auf einfache Weise ein Gefühl für die von ihm eingestellte, beziehungsweise sich in dem Cupholder 3 einstellende Temperatur T zu suggerieren. Das intuitive "Gefühl" für die einzelnen Temperaturwerte T kann dadurch verstärkt werden, dass die Lichtintensität der einzelnen Farbwerte R, G oder B zusätzlich variiert wird. Demnach würde beispielsweise einem besonders hohen Temperaturwert T der Farbwert Rot R in einer hell leuchtenden Lichtintensität zugeordnet. Es ist vorgesehen, dass die einzelnen Lichtquellen in unterschiedlicher Größe ausgebildet sind.

Besonders zweckdienlich ist es, wenn die Beleuchtungseinheit 5 in unmittelbarer Nähe beziehungsweise in/an dem Cupholder 3 selbst angeordnet ist. Dadurch kann es zu keinen missverständlichen Interpretationen hinsichtlich sich davon unterscheidenden Steuerungseinheiten beziehungsweise Anzeigen innerhalb der Fahrgastzelle kommen. Es ist eine separate Anordnung der Beleuchtungseinheit 5 vorgesehen, bei der diese in die Multifunktionsanzeige des Armaturenbretts des Fahrzeugs integriert ist - hier nicht gezeigt.

Anhand der Beleuchtungseinheit 5 kann dem Benutzer zum Einen eine von ihm gewünschte und eingestellte Temperatur T angezeigt werden, wobei beispielsweise ein Aufleuchten einer bestimmten Lichtquelle in einem bestimmten Farbwert R, G oder B bei Erreichen der gewünschten Temperatur T von der Steuerungseinheit 7 veranlasst wird. Zum Weiteren lässt sich anhand der Beleuchtungseinheit 5 ablesen, wie weit eine Abkühlung beziehungsweise Erwärmung des sich in dem Cupholder 3 befindlichen Gefäßes oder dessen Inhalts bereits fortgeschritten ist. Demnach ist der erfindungsgemäße Cupholder 3 mit dessen Beleuchtungseinheit 5 in der Lage, relative Temperaturen T die einer Temperaturdifferenz einer Soll-Temperatur T des Cupholders 3 und einer Ist-Temperatur T in oder an dem Cupholder 3 dem Benutzer in einer intuitiven Art und Weise darzustellen.

Ein weiterer Aspekt dieser Ausführungsform erlaubt es dem Benutzer eine Restwärme-Temperatur T zu erkennen und ihn davor zu bewahren, sich an dem Cupholder 3 eventuell zu verletzen.

In einer bevorzugten Ausführungsform der Erfindung wird die gewünschte Temperatur T über eine Mensch-Maschine-Schnittstelle in der Fahrgastzelle des Fahrzeugs von dem Benutzer eingestellt und der Steuerungseinheit 7 übermittelt. Bei einer Ausführungsform der Cupholderanordnung 1, bei der die Cupholderanordnung 1 kompakt und eigenständig konzipiert ist, lässt sich die gewünschte Temperatur T unmittelbar an dem Cupholder 3 selbst einstellen.

Cupholderanordnungen 1, wie sie oben dargestellt sind, tragen somit der Verbesserung des Komforts im Fahrzeug bei und verbessern gleichzeitig die Sicherheit des Benutzers beim Fahren.

## Patentansprüche

1. Cupholderanordnung (1) für ein Fahrzeug, umfassend:
- einen Cupholder (3),
- ein Armaturenbrett mit einer Multifunktionsanzeige,
- eine Beleuchtungseinheit (5), wobei die Beleuchtungseinheit (5) separat vom Cupholder (3) angeordnet ist und in der Multifunktionsanzeige des Armaturenbretts integriert ist, und
- eine Steuerungseinheit (7), die derart eingerichtet ist, die Beleuchtungseinheit (5) abhängig von einer relativen Temperatureinstellung (T) des Cupholders (3) zu steuern, wobei
- die relative Temperatureinstellung (T) einer Temperaturdifferenz einer einstellbaren Soll-Temperatur des Cupholders (3) und einer Ist-Temperatur in oder an dem Cupholder (3) entspricht,
- die Beleuchtungseinheit (5) mit mehreren Lichtquellen für eine RGB-Beleuchtung mit den Farbwerten Rot, Grün und Blau ausgebildet ist,
- die einzelnen Lichtquellen der Beleuchtungseinheit (5) unterschiedlich groß ausgebildet sind,
- die Steuerungseinheit (7) derart eingerichtet ist, einen den einzelnen einstellbaren Temperaturwerten der relativen Temperatureinstellung (T) entsprechenden Farbverlauf der Beleuchtungseinheit (5) zu steuern, und
- der Cupholder (3) ein aktiv temperierbarer Cupholder (3) zum Wärmen und/oder Kühlen von Gefäßen in dem Cupholder (3) ist.

2. Cupholderanordnung (1) nach Anspruch 1,
**gekennzeichnet durch**
den Farbverlauf von Rot (R), wobei Rot (R) einer hohen Temperatureinstellung (T) entspricht, bis hin zu Blau (B), wobei Blau (B) einer niedrigen Temperatureinstellung (T) entspricht.

3. Cupholderanordnung (1) nach einem der Ansprüche 1 bis 2,
**dadurch gekennzeichnet, dass**
eine Lichtwellenlänge und/oder Lichtintensität der Beleuchtungseinheit (5) abhängig von einer Temperatur eines Gefäßes in dem Cupholder (3) steuerbar ist.

4. Cupholderanordnung (1) nach einem der Ansprüche 1 bis 3,
**dadurch gekennzeichnet, dass**
die Steuerungseinheit (7) in dem Cupholder (3) integriert ist.

5. Cupholderanordnung (1) nach einem der Ansprüche 1 bis 4,
**dadurch gekennzeichnet, dass**
die Steuerungseinheit (7) derart eingerichtet ist, über eine Mensch-Maschine-Schnittstelle aktiviert oder eingestellt zu werden.

6. Verfahren zum Betreiben einer Cupholderanordnung (1) nach einem der Ansprüche 1 bis 5,
wobei
abhängig von einer relativen Temperatureinstellung (T) des Cupholders (3) mittels der dem Cupholder (3) zugeordneten Steuerungseinrichtung (7) ein Farbverlauf der Beleuchtungseinheit (5), wobei die Beleuchtungseinheit (5) mit mehreren Lichtquellen separat vom Cupholder (3) angeordnet ist und in der Multifunktionsanzeige des Armaturenbretts integriert ist und die einzelnen Lichtquellen der Beleuchtungseinheit (5) unterschiedlich groß ausgebildet sind, mit den Farbwerten Rot, Grün und Blau gesteuert wird, welcher den einzelnen einstellbaren Temperaturwerten der relativen Temperatureinstellung (T) entspricht, wobei die relative Temperatureinstellung (T) einer Temperaturdifferenz einer durch einen Benutzer eingestellten Soll-Temperatur des Cupholders (3) und einer Ist-Temperatur in oder an dem Cupholder (3) entspricht, und ein Gefäß in dem Cupholder (3) erwärmt oder gekühlt wird.

## Claims

1. Cup holder arrangement (1) for a vehicle, comprising
- a cup holder (3),
- an instrument panel with a multifunction display,
- a lighting unit (5), wherein the lighting unit (5) is arranged separately from the cup holder (3) and is integrated in the multifunction display of the instrument panel, and
- a control unit (7), which is figured to control the lighting unit (5) depending on a relative temperature setting (T) of the cup holder (3), wherein
- the relative temperature setting (T) corresponds to a temperature difference of an adjustable target temperature of the cup holder (3) and an actual temperature in or at the cup holder (3)
- the lighting unit (5) is designed with a plurality of light sources for an RGB illumination with the colour values red, green and blue,
- the individual light sources of the lighting unit (5) are designed to be of different sizes,
- the control unit (7) is configured to control a colour progression of the lighting unit (5) which corresponds to the individual adjustable temperature values of the relative temperature setting (T), and
- the cup holder (3) is an actively temperable cup holder (3) for warming and/or cooling vessels in the cup holder (3).

2. Cup holder arrangement (1) according to claim 1,
**characterised by**
the colour progression from red (R), wherein red (R) corresponds to a high temperature setting (T), to blue (B), wherein blue (B) corresponds to a low temperature setting (T).

3. Cup holder arrangement (1) according to any of claims 1 to 2,
**characterised in that**,
a light wavelength and/or light intensity of the lighting unit (5) can be controlled depending on a temperature of a vessel in the cup holder (3).

4. Cup holder arrangement (1) according to any of claims 1 to 3,
**characterised in that**,
the control unit (7) is integrated in the cup holder (3).

5. Cup holder arrangement (1) according to any of claims 1 to 4,
**characterised in that**,
the control unit (7) is figured to be activated or adjusted via a human-machine interface.

6. Method for operating a cup holder arrangement (1) according to any of claims 1 to 5,
wherein depending on a relative temperature setting (T) of the cup holder (3) a colour progression of the lighting unit (5) is controlled by means of the control device (7) assigned to the cup holder (3), wherein the lighting unit (5) having a plurality of light sources is arranged separately from the cup holder (3) and is integrated in the multifunction display of the instrument panel and the individual light sources of the lighting unit (5) are designed to be of different sizes, with the colour values red, green and blue, which colour progression corresponds to the individually adjustable temperature values of the relative temperature setting (T), wherein the relative temperature setting (T) corresponds to a temperature difference of a target temperature, set by a user, of the cup holder (3) and an actual temperature in or at the cup holder (3), and a vessel is warmed or cooled in the cup holder (3).

## Revendications

1. Agencement de porte-gobelet (1) pour un véhicule, comprenant :
- un porte-gobelet (3),
- un tableau de bord avec un affichage multifonctions,
- une unité d'éclairage (5), dans lequel l'unité d'éclairage (5) est disposée séparément du porte-gobelet (3) et est intégrée dans l'affichage multifonctions du tableau de bord, et
- une unité de commande (7), qui est configurée de manière à commander l'unité d'éclairage (5) en fonction d'un réglage de température relatif (T) du porte-gobelet (3), dans lequel
- le réglage de température relatif (T) correspond à une différence de température entre une température de consigne réglable du porte-gobelet (3) et une température réelle dans ou sur le porte-gobelet (3),
- l'unité d'éclairage (5) est conçue avec plusieurs sources de lumière pour un éclairage RGB avec les valeurs de couleur rouge, vert et bleu,
- les différentes sources de lumière de l'unité d'éclairage (5) sont conçues de tailles différentes,
- l'unité de commande (7) est configurée de manière à commander un dégradé de couleurs de l'unité d'éclairage (5) correspondant aux différentes valeurs de température réglables du réglage de température relatif (T), et
- le porte-gobelet (3) est un porte-gobelet à température réglable activement (3) pour chauffer et/ou refroidir des récipients dans le porte-gobelet (3).

2. Agencement de porte-gobelet (1) selon la revendication 1,
**caractérisé en ce**
**que** le dégradé de couleurs va du rouge (R), dans lequel le rouge (R) correspond à un réglage de température élevé (T), au bleu (B), dans lequel le bleu (B) correspond à un réglage de température bas (T).

3. Agencement de porte-gobelet (1) selon l'une quelconque des revendications 1 à 2, **caractérisé en ce**
**qu'**une longueur d'onde de lumière et/ou une intensité de lumière de l'unité d'éclairage (5) peut être commandée en fonction d'une température d'un récipient dans le porte-gobelet (3).

4. Agencement de porte-gobelet (1) selon l'une quelconque des revendications 1 à 3, **caractérisé en ce**
**que** l'unité de commande (7) est intégrée dans le porte-gobelet (3).

5. Agencement de porte-gobelet (1) selon l'une quelconque des revendications 1 à 4, **caractérisé en ce**
**que** l'unité de commande (7) est configurée de manière à être activée ou réglée par l'intermédiaire d'une interface homme-machine.

6. Procédé de fonctionnement d'un agencement de porte-gobelet (1) selon l'une quelconque des revendications 1 à 5,
dans lequel, en fonction d'un réglage de température relatif (T) du porte-gobelet (3) au moyen du dispositif de commande (7) affecté au porte-gobelet (3), un dégradé de couleurs de l'unité d'éclairage (5), l'unité d'éclairage (5) étant disposée avec plusieurs sources de lumière séparément du porte-gobelet (3) et étant intégrée dans l'affichage multifonctions du tableau de bord et les différentes sources de lumière de l'unité d'éclairage (5) étant conçues de tailles différentes, est commandée avec les valeurs de couleur rouge, vert et bleu, qui correspond aux différentes valeurs de température réglables du réglage de température relatif (T), dans lequel le réglage de température relatif (T) correspond à une différence de température entre une température de consigne du porte-gobelet (3) réglée par un utilisateur et une température réelle dans ou sur le porte-gobelet (3), et un récipient dans le porte-gobelet (3) est chauffé ou refroidi.
